Europäisches Patentamt

European Patent Office

Office européen des brevets

(11) Veröffentlichungsnummer: **0 012 713**
**B1**

(12) **EUROPÄISCHE PATENTSCHRIFT**

(45) Veröffentlichungstag der Patentschrift:
27.04.83

(51) Int. Cl.³: **G 03 B 27/80,** G 03 B 27/73

(21) Anmeldenummer: **79810128.3**

(22) Anmeldetag: **15.10.79**

(54) **Verfahren zur Steuerung der Belichtung bei der Herstellung fotografischer Kopien.**

(30) Priorität: **20.10.78 CH 10875/78**

(43) Veröffentlichungstag der Anmeldung:
**25.06.80 Patentblatt 80/13**

(45) Bekanntmachung des Hinweises auf die Patenterteilung:
**27.04.83 Patentblatt 83/17**

(84) Benannte Vertragsstaaten:
**CH DE FR GB IT**

(56) Entgegenhaltungen:
**DE-A-2 226 576**
**DE-A-2 459 456**
**DE-A-2 535 034**
**DE-A-2 551 799**
**DE-A-2 636 337**
**DE-A-2 747 527**

(73) Patentinhaber: **GRETAG Aktiengesellschaft,**
**Althardstrasse 70, CH-8105 Regensdorf (CH)**

(72) Erfinder: **Ursprung, Karl, Längackerweg 29,**
**CH-8155 Niederhasli (CH)**
Erfinder: **Zimmermann, Franz, Kreuzbühlweg 31,**
**CH-6045 Meggen (CH)**

(74) Vertreter: **Pirner, Wilhelm et al, Patentabteilung der**
**CIBA-GEIGY AG Postfach, CH-4002 Basel (CH)**

Verfahren zur Steuerung der Belichtung bei der Herstellung fotografischer Kopien

Die Erfindung betrifft ein Verfahren zur Steuerung der Belichtung bei der Herstellung fotographischer Kopien, bei welchem die Kopiervorlage punktweise fotoelektrisch abgetastet, von jedem Bildpunkt die Neutraldichte bestimmt und aus den einzelnen Dichtewerten ein Basisdichtekorrekturwert errechnet wird, anhand dessen die Gesamthelligkeit der herzustellenden Kopie gesteuert wird.

Erfahrungsgemäss müssen im Dichteaufbau ähnliche Kopiervorlagen, in der Regel Negative, oft sehr unterschiedlich kopiert werden, je nachdem ob sich der Motivschwerpunkt (zum Beispiel Personen) im hellen oder dunklen Bereich des Bildes befindet.

Bei einer Blitzlichtaufnahme liegt der bildwichtige Teil im allgemeinen in den dichten Stellen des Negativs oder stellt überhaupt die dichteste Stelle dar, da z.B. bei Personenaufnahmen das Gesicht der aufzunehmenden Person direkt vom Blitzlicht angestrahlt wird. In diesem Fall ist es wichtig, dass bei der Herstellung der Kopie die dichten Stellen des Negativs richtig wiedergegeben werden. Bei einer Strassenszene dagegen in einer engen, im Schatten liegenden Strasse befindet sich der bildwichtige Motivteil meist in den Schattenpartien, also in den Bereichen geringer Negativdichte, während z.B. ein zufällig etwa am Bildrand sichtbares Stück Himmel, das eine hohe Dichte im Negativ hervorruft, nicht bildwichtig ist. Ein Negativ mit einem solchen Motiv muss daher zur richtigen Wiedergabe des bildwichtigen Bereichs gegenüber einer Blitzlichtaufnahme mit annähernd gleicher Gesamtdichte eine stark verminderte Belichtung erfahren. Ähnlich ist die Situation bei Schneeszenen, Motiven mit grösseren Himmelsanteilen und Gegenlichtaufnahmen. Nach den bisher bekannten Belichtungssteuerungsmethoden werden Negative mit solchen Motiven in der Regel ebenfalls zu dunkel kopiert.

Zur weiteren Absenkung der bei den heutigen automatischen Kopiergeräten ohnehin bereits sehr niedrigen Ausschussrate ist daher unbedingt erforderlich, die Kopiervorlagen mit Hilfe geeigneter Kriterien nach ihren Motiven zu unterscheiden und entsprechend verschieden zu behandeln. Es sind zwar in dieser Hinsicht bereits zahlreiche Vorschläge bekanntgeworden. Diese Vorschläge lösen jedoch, obwohl sie eine gewisse Qualitätsverbesserung mit sich bringen, das vorstehende Problem nur zum Teil und nicht in allen Fällen vollauf befriedigend.

So ist beispielsweise aus der DE-PS Nr. 1042374 ein Kopierverfahren bekannt, bei welchem die Dichte der Vorlage in den drei Grundfarben punktweise abgetastet wird und aus den so erhaltenen diskreten Dichtewerten durch gewichtetes Mitteln Flächendichten gewonnen werden, aus welchen dann wie bei den bekannten Verfahren mit integraler Dichtemessung die Filterkombination für die Belichtung des Kopiermaterials ermittelt wird. Bei der gewichteten Mittelung werden die Dichtewerte in Abtastpunkten des zentralen Vorlagenbereichs stärker bewertet als die vom Randbereich der Vorlage. Dieses bekannte Verfahren macht sich die Erfahrungstatsache zunutze, dass der Motivschwerpunkt im allgemeinen im Zentrum eines Bildes zu finden ist. Es kann zwar bei geeigneter Auswahl der Wichtkoeffizienten eine gewisse Qualitätsverbesserung bringen, ist aber nicht ausreichend empfindlich, um auch bei den eingangs geschilderten Extremfällen von Kopiervorlagen immer zu einwandfreien Kopien zu führen.

Des weiteren ist beispielsweise aus der DE-AS Nr. 1772475 sowie aus der DE-OS Nr. 2132023 bekannt, das Bildfeld der Kopiervorlage in einen geschlossenen bzw. in zwei Hälften geteilten Randbereich und in eine Vielzahl von kleinen, im Bildzentrum befindlichen Teilbereichen aufzuteilen, die Vorlage in jedem einzelnen Bereich gesondert auszumessen und anhand der Einzelmessergebnisse eine Belichtungsklassifizierung nach wohlbekannten Kategorien vorzunehmen. Beim Verfahren nach der DE-AS Nr. 1772475 gehen in die Klassifizierung im wesentlichen nur zwei Werte ein, und zwar die mittlere Dichte des gesamten Randbereichs und die maximale Dichte der zentralen Teilbereiche. Beim Verfahren nach der DE-OS Nr. 2143023 ist die Klassifizierung etwas verfeinert, in dem dort die mittleren Dichten der beiden Randbereichhälften getrennt betrachtet werden. Obwohl sich bei diesen beiden bekannten Verfahren gegenüber den Verfahren mit integraler Dichtemessung und auch gegenüber dem Verfahren nach der DE-PS Nr. 1042374 bereits eine gewisse Verbesserung der Ausbeute qualitativ befriedigender Kopien erzielen lässt, kann es doch insbesondere wegen der nur geringen Anzahl der in die Klassifizierung eingehenden Parameter nicht allen in der Praxis auftretenden Ansprüchen gerecht werden. Ähnliches gilt auch für das in der DE-A Nr. 2226576 beschriebene Verfahren, bei welchem das Bildfeld der Kopiervorlage in vier Randbereiche und vier diesen zugeordnete Zentralbereiche unterteilt wird und eine allfällige Belichtungskorrektur anhand eines Vergleichs der mittleren Transparenzen der Randbereiche mit denen der zugeordneten Zentralbereiche erfolgt. Je nachdem, ob sich die Transparenzen der Randbereiche um mehr als ein gewisses Mindestmass in der einen oder der anderen Richtung von den Transparenzen der Zentralbereiche unterscheiden, wird mit Über- bzw. Unterkorrektur oder ohne Korrektur gearbeitet. Dieses bekannte Verfahren lässt nur eine relativ grobe Motivsteuerung zu und kann die heute vielfach sehr hohen Qualitätsanforderungen ebenfalls nicht voll befriedigen. Schliesslich ist beispielsweise aus der DE-OS Nr. 2142176 ein Belichtungssteuerungsverfahren bekannt, bei welchem die Dichte der Kopiervorlage punktweise abgetastet wird und wobei insbesondere diejenigen Dichtewerte, die aus einem speziellen Bereich der Vorlage stammen, zur Bestimmung der Belichtungsdaten herangezogen werden. Der spezielle Bereich wird dabei von Vorlage zu Vorlage individuell ausgewählt und umfasst den bildwichtigen Bereich der Vorlage. Zur Ermittlung der Belichtungsdaten werden die mittlere Dichte, die maximale Dichte und der mittlere Kontrast von Abtastpunkt zu Abtastpunkt des ausgewählten Bereichs sowie gegebenenfalls die mittlere Dichte der gesamten Kopiervorlage ausgewertet. Bei diesem Kopierverfahren lässt sich die Belichtung der Vorlage durch geeignete Auswahl des speziellen Abtastbereichs zwar sehr gut an die spezifischen motivbedingten Gegebenheiten jeder einzelnen Vorlage anpassen. Die Auswahl des speziellen Abtastbereichs muss jedoch visuell erfolgen. Dieses Verfahren ist daher in dieser Form nicht zur Automatisierung geeignet. Legt man andererseits, wie in der DE-OS Nr. 2142176 ebenfalls vorgeschlagen wird, den speziellen Abtastbereich für alle Vorlagen fest, zum Beispiel etwa auf den Zentralbereich der Vorlage, so lässt sich zwar der visuell durchzuführende Verfahrensschritt vermeiden, jedoch sind dann die in diesem Verfahren verwendeten, in die Berechnung der Belichtungsdaten eingehenden Grössen nicht in jedem Falle zur Herstellung qualitativ einwandfreier Kopien ausreichend.

Eine wesentliche Verbesserung der Belichtungssteuerung und damit verbunden eine erhebliche Senkung der Ausschussrate brachte das z.B. in der US-PS Nr. 4092067 beschriebene Verfahren, gemäss welchem die punktweise abgetastete Kopiervorlage in konzentrische Zonen eingeteilt wird, für jede Zone aus den Dichtewerten der in ihr befindlichen Bild- bzw. Abtastpunkte einerseits und dem Dichtewert in einem für alle Zonen gemeinsamen Bezugsbildpunkt andererseits nach für jede Zone speziellen Vorschriften Zwischenwerte und aus diesen Zwischenwerten ein für die Ermittlung der Gesamtbelichtung massgebender Endwert gebildet wird. Durch diese Aufteilung der Vorlage in mehrere Zonen und individuelle Auswertung der Dichtewerte innerhalb dieser Zonen kann die Dichteverteilung der Kopiervorlage genauer erfasst, der bildwichtige Bereich besser belichtet werden.

Es hat sich nun aber herausgestellt, dass auch dieses bekannte Verfahren noch verbesserungsfähig ist, insbesondere was die Verarbeitung von Kopiervorlagen mit Gegenlichtaufnahmen sowie Schnee- und Himmelsszenen anbelangt. Aufgabe der Erfindung ist demnach ein Belichtungssteuerungsverfahren der eingangs definierten Art derart zu verbessern, dass auch Kopiervorlagen mit schwierig zu behandelnden Motiven besser kopiert werden. Diese Aufgabe wird gemäss der Erfindung dadurch gelöst, dass die Kopiervorlage durch elektronischen Vergleich der Dichtewerte ihrer Bildpunkte mit einem Schwellenwert daraufhin untersucht wird, ob sie sich bis zu mindestens einem ihrer Ränder erstreckende Flächen aufweist, deren Bildpunkte eine den Schwellenwert übersteigende Dichte besitzen, dass die Dichtewerte mindestens eines Teils von solchen Flächen angehörenden Bildpunkten reduziert werden, und dass für einen Teil der von den einzelnen Dichtewerten zum Basisdichtekorrekturwert führenden Rechenschritte anstelle der gemessenen die reduzierten Dichtewerte verwendet werden.

Im folgenden wird die Erfindung näher erläutert. Die Kopiervorlage, die in der Regel ein Negativ ist und im folgenden nur noch als solches bezeichnet wird, wird in einem automatischen Printer in den drei Farbkanälen fotoelektrisch punktweise abgetastet und die dabei von den fotoelektrischen Fühlern erfassten Lichtwerte werden über Verstärker, Logarithmierer und A/D-Wandler in digitale Signale umgewandelt, welche die drei Farbdichtewerte des Negativs in den einzelnen Abtast- bzw. Bildpunkten repräsentieren. Die so gewonnenen Farbdichtewerte werden nun in der Belichtungssteuerung des Printers analysiert und zu den endgültigen Belichtungsdaten aufbereitet, anhand welcher bei der auf die Abtastung folgenden Belichtung im Printer das Farbgleichgewicht und die Gesamthelligkeit der Kopie gesteuert werden. Die Analyse und Aufbereitung der gemessenen Abtastwerte erfolgt dabei digital in einem Mikro- oder Minicomputer. Insofern entspricht das erfindungsgemässe Verfahren dem bekannten Stand der Technik, wie er beispielsweise durch den automatischen Printer 3140 der Firma Gretag AG, Regensdorf (Schweiz), oder durch die US-PS Nrn. 4092067 und 4101216 gegeben ist. Der Inhalt dieser Patentschriften wird daher ausdrücklich als integrierender Bestandteil der vorliegenden Beschreibung erklärt. Der wesentliche Unterschied des erfindungsgemässen Verfahrens gegenüber dem Stand der Technik liegt in der Aufbereitung der abgetasteten Dichtewerte zur Bildung des für die Steuerung der Gesamthelligkeit der Kopie massgeblichen Basisdichtekorrekturwerts BDC, der dann wieder in herkömmlicher Weise zur Steuerung der Kopierfilter des Printers weiterverarbeitet wird.

Zunächst wird aus den drei Farbdichtewerten jedes Bildpunkts, beispielsweise wie in der US-PS Nr. 4092067 beschrieben durch Linearkombination, ein Neutraldichtewert gebildet. Nun werden der minimale und der maximale Neutraldichtewert ermittelt und daraus ein arithmetischer Mittelwert COD sowie ein Schwellenwert gebildet. Der Schwellenwert wird bei etwa $2/3$ des Dichteintervalls zwischen dem minimalen und dem maximalen Dichtewert festgelegt. Er kann aber je nach Bedarf auch zu grösseren oder kleineren Dichtewerten hin verschoben werden.

Darauf wird die Negativfläche in z.B. fünf konzentrische Zonen ähnlich wie bei der US-PS Nr. 4092067 eingeteilt. Nun wird aus den Neutraldichtewerten der einzelnen Bildpunkte ein Integraldichtewert IDC gebildet, und zwar durch zonenabhängiges gewichtetes Mitteln derart, dass in der Negativmitte liegende Bildpunkte stärker berücksichtigt werden als randnahe Punkte. In der Praxis wird dazu jeder Zone ein erster Wichtfaktor zugeordnet, wobei diese Wichtungsfaktoren von der innersten zur äussersten Zone hin abnehmen. Praktische Werte sind etwa 1,4; 0,8; 0,3; 0,1 und 0. Abweichungen davon sind möglich, so können die Wichtfaktoren etwa im Bereich von 2,0 bis 0 gewählt werden. Der so gebildete Integraldichtewert IDC trägt ebenso wie der Mittelwert COD einen Anteil zur noch weiter zu bestimmenden Basisdichtekorrektur bei und wirkt für grössere Flächen ausgleichend, wobei aber doch das Bildzentrum, in dem in der Regel die bildwichtigen Teile vermutet werden, stärker bewertet wird.

Anschliessend wird das Negativ daraufhin untersucht, ob es sich bis zu wenigstens einem seiner Ränder erstreckende Flächen relativ grosser Dichte aufweist. Solche sich bis zum Negativrand erstreckende Flächen sind erfahrungsgemäss in der Regel immer dann vorhanden, wenn das Negativ Schneeszenen oder Gegenlichtaufnahmen und/ oder Motive mit Anteilen an hellem Himmel darstellt. Bei Vorhandensein solcher dichter Flächen wird das Vorliegen solcher Szenen bzw. Motive angenommen und, wie aus dem Folgenden noch erhellt, eine entsprechende Minusdichtekorrektur bewirkt, so dass die Kopie heller und damit besser wird.

Zur Detektierung der genannten dichten Flächen werden die Dichtewerte der einzelnen Bildpunkte, die zum Beispiel in einem 8×12 Punkte umfassenden Abtastraster angeordnet sein können, jeweils von den Negativrändern ausgehend sukzessive mit dem Schwellenwert verglichen. Besitzt ein Punkt eine über dem Schwellenwert liegende Dichte und gilt dies gleichzeitig auch für alle in derselben Rasterzeile oder -spalte in Richtung auf den Negativrand zu liegenden Bildpunkte, so wird er als zu einer Himmelsfläche gehörender Punkt betrachtet und markiert. Dieses Auswahlverfahren ist beim derzeitigen Stand der Computer-Technik für den Fachmann ohne weiteres realisierbar und bedarf keiner weiteren Erläuterung.

Die Neutraldichtewerte von als zu Himmelsflächen gehörig erkannten Bildpunkten werden nun um einen gewissen Betrag reduziert, und zwar abhängig von ihrer tatsächlichen Grösse. Im einzelnen erfolgt dies derart, dass aus jedem Neutraldichtewert $D_H$ (Index H steht für Himmel) ein reduzierter Wert $D'_H$ gemäss der Formel

$$D'_H = (D_H - D_{min.}) \cdot F_H + D_{min.}$$

bestimmt wird, worin $D_{min.}$ der minimale vorkommende Dichtewert des gesamten Negativs und $F_H$ ein Reduktionsfaktor im Bereich von etwa 0 bis 0,9, vorzugsweise von 0,6 bis 0,8, insbesondere 0,75, ist. Die Reduktion der Dichtewerte erfolgt somit derart, dass ihr den minimalen Dichtewert übersteigender Anteil mit dem Reduktionsfaktor multipliziert und zum minimalen Dichtewert addiert wird.

Nunmehr wird in jeder Negativzone der maximale Dichtewert bestimmt, und zwar unter Berücksichtigung der reduzierten Dichtewerte. Die einzelnen Zonenmaximalwerte werden nun zonenabhängig gewichtet gemittelt, wobei jeder Zone ein zweiter Wichtfaktor zugeordnet ist und die Wichtfaktoren von der innersten zur äussersten Zone hin abnehmen. Die Wichtfaktoren können der Reihe nach beispielsweise etwa 1,26; 1,0; 0,5;

0,2 und 0 betragen. Generell können sie in der Praxis vernünftig etwa im Bereich von 2,0 bis 0 liegen.

Das dermassen gefundene gewichtete Mittel bildet dann eine Maximalwertkenngrösse MXC, die insbesondere bei Blitzlichtaufnahmen zur Geltung kommt.

Der Integraldichtewert IDC, der Mittelwert COD und die Maximalwertkenngrösse MXC werden nun durch Linearkombination mit den auf die Einheit normierten Faktoren a, b und c wie folgt zum Basisdichtekorrekturwert BDC zusammengefasst:

$$BDC = a \cdot IDC + b \cdot MCX + c \cdot COD \quad (a + b + c = 1)$$

Die Anteilsfaktoren a bis c betragen beispielsweise 0,4; 0,2 und 0,4. Sie können jedoch auch davon abweichen, je nachdem, welches Gewicht den einzelnen Anteilen beigemessen werden soll. Praktische Bereiche sind 0,4 ± 0,4; 0,2 ± 0,2 und 0,4 ± 0,4.

Der so ermittelte Basisdichtekorrekturwert BDC kann nun in an sich bekannter Weise, beispielsweise etwa wie in der US-PS Nr. 4092067 beschrieben, zur Steuerung der Gesamthelligkeit der Kopien weiterverarbeitet werden.

Es hat sich gezeigt, dass bei Schneeszenen und Gegenlichtaufnahmen noch eine weitere Verbesserung erreicht werden kann, wenn gemäss einem weiteren Gedanken der Erfindung dem Basiskorrekturwert ein diesbezüglicher Zusatzkorrekturterm überlagert wird. Zur Ermittlung dieses Zusatzkorrekturterms wird die Differenz zwischen dem gegebenenfalls nach der Reduktion der Dichtewerte verbleibenden maximalen Dichtewert der äussersten Negativzone und dem Mittelwert COD gebildet und mit einem Faktor multipliziert. Der Faktor liegt im Bereich von 0,05 bis 0,4 und vorzugsweise etwa bei 0,15. Der Zusatzterm wird nun vom Basiskorrekturwert abgezogen, so dass sich gegenüber dem unmodifizierten Basisdichtekorrekturwert eine Minuskorrektur bzw. hellere Kopie ergibt, falls der Zusatzterm positiv ist, und umgekehrt.

## Patentansprüche

1. Verfahren zur Steuerung der Belichtung bei der Herstellung fotografischer Kopien, bei welchem die Kopiervorlage punktweise fotoelektrisch abgetastet, von jedem Bildpunkt die Neutraldichte bestimmt und aus den einzelnen Dichtewerten ein Basisdichtekorrekturwert errechnet wird, anhand dessen die Gesamthelligkeit der herzustellenden Kopie gesteuert wird, dadurch gekennzeichnet, dass die Kopiervorlage durch elektronischen Vergleich der Dichtewerte ihrer Bildpunkte mit einem Schwellenwert daraufhin untersucht wird, ob sie sich bis zu mindestens einem ihrer Ränder erstreckende Flächen aufweist, deren Bildpunkte eine den Schwellenwert übersteigende Dichte besitzen, dass die Dichtewerte mindestens eines Teils von solchen Flächen angehörenden Bildpunkten reduziert werden, und dass für einen Teil der von den einzelnen Dichtewerten zum Basisdichtekorrekturwert führenden Rechenschritte anstelle der gemessenen die reduzierten Dichtewerte verwendet werden.

2. Verfahren nach dem Anspruch 1, dadurch gekennzeichnet, dass der Schwellenwert für jede Kopiervorlage separat aus deren maximalem und deren minimalem Dichtewert festgelegt wird.

3. Verfahren nach dem Anspruch 2, dadurch gekennzeichnet, dass der Schwellenwert so gewählt wird, dass er das Intervall zwischen minimalem und maximalem Dichtewert im Verhältnis von etwa 2:1 teilt und näher beim maximalen Dichtewert liegt.

4. Verfahren nach einem der voranstehenden Ansprüche, dadurch gekennzeichnet, dass die Reduktion der Dichtewerte so erfolgt, dass ihr den minimalen Dichtewert der Kopiervorlage übersteigender Anteil mit einem Reduktionsfaktor < 1 multipliziert und zum minimalen Dichtewert addiert wird.

5. Verfahren nach dem Anspruch 4, dadurch gekennzeichnet, dass der Reduktionsfaktor von 0 bis 0,9, vorzugsweise von 0,6 bis 0,8, gewählt wird.

6. Verfahren nach einem der vorangehenden Ansprüche, dadurch gekennzeichnet, dass die Kopiervorlage in konzentrische Zonen eingeteilt wird, und dass aus den Dichtewerten der einzelnen Bildpunkte durch zonenabhängige gewichtete Mittelung ein Integraldichtewert (IDC) gebildet wird, wobei jeder Zone ein erster Wichtfaktor zugeordnet ist und die Wichtfaktoren von der innersten zur äussersten Zone hin abnehmen.

7. Verfahren nach dem Anspruch 6, dadurch gekennzeichnet, dass für die Bestimmung des Integraldichtewerts (IDC) die durch die fotoelektrische Abtastung erhaltenen Dichtewerte der einzelnen Bildpunkte ohne vorgehende Reduktion herangezogen werden.

8. Verfahren nach einem der vorangehenden Ansprüche, dadurch gekennzeichnet, dass die Kopiervorlage in konzentrische Zonen eingeteilt wird, dass aus jeder Zone der nach der vorhergehenden Reduktion verbleibende maximale Dichtewert bestimmt wird, und dass aus diesen maximalen Dichtewerten durch zonenabhängige gewichtete Mittelung eine Maximalwertkenngrösse (MXC) gebildet wird, wobei jeder Zone ein zweiter Wichtfaktor zugeordnet ist und die Wichtfaktoren von der innersten zur äussersten Zone hin abnehmen.

9. Verfahren nach den beiden Ansprüchen 6 und 8, dadurch gekennzeichnet, dass aus dem maximalen und dem minimalen Dichtewert der Kopiervorlage ein Mittelwert (COD) gebildet wird, und dass der Basiskorrekturwert (BDC) durch eine Linearkombination von Integraldichtewert (IDC), Maximalwertkenngrösse (MXC) und dem Mittelwert (COD) gemäss der Formel

$$BDC = a \cdot IDC + b \cdot MXC + c \cdot COD$$

gebildet wird, wobei a, b und c auf die Einheit normierte Faktoren sind (a + b + c = 1).

10. Verfahren nach dem Anspruch 9, dadurch gekennzeichnet, dass die Faktoren a, b und c im Bereich von a = 0,4 ± 0,4; b = 0,2 ± 0,2 und c = 0,4 ± 0,4 gewählt werden.

11. Verfahren nach dem Anspruch 6, dadurch gekennzeichnet, dass die ersten Wichtfaktoren im Bereich von etwa 2,0 bis etwa 0 abnehmend gewählt werden.

12. Verfahren nach dem Anspruch 8, dadurch gekennzeichnet, dass die zweiten Wichtfaktoren im Bereich von etwa 2,0 bis etwa 0 abnehmend gewählt werden.

13. Verfahren nach dem Anspruch 9, dadurch gekennzeichnet, dass aus der Differenz zwischen dem nach der Reduktion der Dichtewerte in der äussersten Zone verbleibenden maximalen Dichtewert und dem Mittelwert (COD) und einem Multiplikationsfaktor ein erster additiver Zusatzkorrekturterm gebildet wird, mit dem der für die Gesamthelligkeit massgebliche Basiskorrekturwert so modifiziert wird, dass sich gegenüber dem unmodifizierten Basiskorrekturwert eine Minuskorrektur oder Pluskorrektur ergibt, wenn die genannte Differenz grösser bzw. kleiner als Null ist.

14. Verfahren nach dem Anspruch 12, dadurch gekennzeichnet, dass der Multiplikationsfaktor im Bereich von 0,05 bis 0,4, und vorzugsweise um 0,15, liegt.

## Claims

1. A method of modulating the exposure of photographic copies where the original to be copied is scanned point by point photoelectrically, the neutral density is determined for each point of the image and, from the individual density values, a basic density correction term is calculated by means of which the over-all brightness of the copy to be prepared is modulated, characterised in that the original to be copied is investigated by electronic comparison of the density values of its image points with a threshold value in order to determine whether the original to be copied contains areas which extend to at least one of its margins and which contain image points with a density above the threshold value, that the density values of at least a portion of the image points associated with such areas are reduced, and that the reduced density values are used instead of the measured ones for a portion of the calculation steps leading from the individual density values to the basic density correction term.

2. A method according to claim 1, characterised in that the threshold value for each original to be copied is determined separately from the maximum and the minimum density values of that original.

3. A method according to claim 2, characterised in that the threshold value is selected in such manner that it divides the interval between the minimum and the maximum density values in a proportion of approximately 2:1, and lies closer to the maximum density value.

4. A method according to one of the foregoing claims, characterised in that the reduction of the density values is accomplished in a manner that the fraction which exceeds the minimum density value of the original to be copied is multiplied by a reduction factor smaller than 1 and is added to the minimum density value.

5. A method according to claim 4, characterised in that the reduction factor is selected from 0 to 0.9, preferably from 0.6 to 0.8.

6. A method according to one of the foregoing claims, characterised in that the original to be copied is subdivided into concentric zones, and that an integral density value (IDC) is formed from the density values of the individual image points by a weight zone-related averaging, where there is assigned to each zone a first weight factor, and the weight factors decrease in value from the innermost toward the outermost zone.

7. A method according to claim 6, characterised in that the density values of the individual image points, obtained by photo-electric scanning, are used without reduction for the determination of the integral density value (IDC).

8. A method according to one of the foregoing claims, characterised in that the original to be copied is subdivided into concentric zones, that there is determined from each zone the maximum density value which remains after the preceding reduction, and that there is formed from these maximum density values by a weight zone-related averaging a maximum density parameter (MXC), where there is assigned to each zone a second weight factor, the weight factors decrease from the innermost toward the outermost zone.

9. A method according to claims 6 and 8, characterised in that there is formed from the maximum and the minimum density values of the original to be copied a mean value (COD) and that the basic density correction term (BDC) is formed by a linear combination of the integral density value (IDC), the maximum density parameter (MXC) and the mean value (COD) according to the formula

$$BDC = a \cdot IDC + b \cdot MXC + c \cdot COD$$

where a, b and c are standard factors of unity $(a + b + c = 1)$.

10. A method according to claim 9, characterised in that factors a, b and c are selected in the range of a = 0.4 ± 0.4; b = 0.2 ± 0.2, and 0.4 ± 0.4.

11. A method according to claim 6, characterised in that the first weight factors are selected in a diminishing range of approximately 2.0 to approximately 0.

12. A method according to claim 8, characterised in that second weight factors are selected in a diminishing range of approximately 2.0 to approximately 0.

13. A method according to claim 9, characterised in that there is formed from the difference between the maximum density value, which remains after the reduction of the density values in the outermost zone, and the mean value (COD), and a multiplication factor, a first additive complementary correction term with which the basic density correction term for the determined brightness is so modified that, in comparison with the unmodified basic density correction term, a negative or a positive correction results if said difference is greater or, respectively, smaller than zero.

14. A method according to claim 12, characterised in that the multiplication factor is in the range of 0.05 to 0.4 and is preferably about 0.15.

## Revendications

1. Procédé pour commander l'exposition lors de la réalisation de tirages photographiques, dans lequel l'original à copier est balayé ponctuellement par voie photo-électrique, la densité neutre est déterminée à partir de chaque point d'image et, à partir des valeurs individuelles de la densité, une valeur de correction de la densité de base est calculée, au moyen de laquelle la brillance totale de la copie à effectuer est commandée, caractérisé par le fait que, par une comparaison électronique des valeurs de densité de ses points d'image avec une valeur de seuil, l'original, en général un négatif, est soumis à un examen pour déterminer s'il comporte des surfaces s'étendant au moins jusqu'à l'un de ses bords et dont les points d'image possèdent une densité excédant ladite valeur de seuil, que les valeurs de densité d'au moins une partie des points d'image appartenant à de telles surfaces sont réduites, et que, pour une partie des étapes de calcul partant des valeurs individuelles de densité pour déboucher sur ladite valeur de correction de la densité de base, on utilise les valeurs de densité réduites à la place des valeurs mesurées.

2. Procédé selon la revendication 1, caractérisé par le fait que la valeur de seuil pour chaque négatif est déterminée séparément à partir de sa valeur maximale de densité et de sa valeur minimale de densité.

3. Procédé selon la revendication 2, caractérisé par le fait que la valeur de seuil est sélectionnée de telle sorte qu'elle subdivise l'intervalle entre la valeur minimale de densité et la valeur maximale de densité, dans le rapport d'environ 2:1, et qu'elle est plus proche de la valeur maximale de densité.

4. Procédé selon l'une quelconque des revendications 1 à 3, caractérisé par le fait que la réduction des valeurs de densité a lieu de façon que la part de cette dernière excédant la valeur minimale de densité de l'original soit multipliée par un facteur de réduction inférieur à 1 et soit ajoutée à la valeur minimale de densité.

5. Procédé selon la revendication 4, caractérisé par le fait que la valeur du facteur de réduction est choisie entre 0 à 0,9, de préférence entre 0,6 et 0,8.

6. Procédé selon l'une quelconque des revendications 1 à 5, caractérisé par le fait que l'original est subdivisé en zones concentriques et qu'une valeur de densité intégrale (IDC) est formée à partir des valeurs de densité des points d'image individuels par obtention d'une moyenne pondérée en fonction des zones, un premier facteur de pondération étant associé à chaque zone et les facteurs de pondération décroissant de la zone située le plus à l'intérieur jusqu'à la zone située le plus à l'extérieur.

7. Procédé selon la revendication 6, caractérisé par le fait que, pour déterminer la valeur de densité intégrale (IDC), on utilise sans aucune réduction préalable les valeurs de densité des points d'image individuels obtenus par le balayage photo-électrique.

8. Procédé selon l'une quelconque des revendications 1 à 7, caractérisé par le fait que l'original est subdivisé en zones concentriques, que la valeur maximale de densité subsistant après la réduction préalable est déterminée à partir de chaque zone, et qu'une grandeur caractéristique de la valeur maximale (MXC) est formée à partir de ces valeurs maximales de la densité par obtention d'une moyenne pondérée en fonction des zones, un deuxième facteur de pondération étant associé à chaque zone et les facteurs de pondération décroissant de la zone située le plus à l'intérieur jusqu'à la zone située le plus à l'extérieur.

9. Procédé selon les revendications 6 et 8, caractérisé par le fait qu'une valeur moyenne (COD) est formée à partir de la valeur maximale de densité et de la valeur minimale de densité de l'original et que la valeur de correction de base (BDC) est obtenue par une combinaison linaire de la valeur de densité intégrale (IDC), de la grandeur caractéristique de la valeur maximale (MXC) et de la valeur moyenne (COD) selon la formule

$$BDC = a \cdot IDC + b \cdot MXC + c \cdot COD$$

dans laquelle a, b et c sont des facteurs rapportés à l'unité et tels que la somme a + b + c vaut 1.

10. Procédé selon la revendication 9, caractérisé par le fait que les facteurs a, b et c sont choisis dans des plages telles que a = 0,4 $\pm$ 0,4, b = 0,2 $\pm$ 0,2 et c = 0,4 $\pm$ 0,4.

11. Procédé selon la revendication 6, caractérisé par le fait que les premiers facteurs de pondération sont choisis décroissants dans la plage d'environ 2,0 à environ 0.

12. Procédé selon la revendication 8, caractérisé par le fait que les seconds facteurs de pondération sont choisis décroissants dans la plage d'environ 2,0 à environ 0.

13. Procédé selon la revendication 9, caractérisé par le fait que, à partir de la différence entre la valeur maximale de densité persistant après la réduction des valeurs de densité dans la zone située le plus à l'extérieur et la valeur moyenne (COD), et à l'aide d'un facteur de multiplication, est formé un premier terme additionnel de correction, au moyen duquel la valeur de correction de base déterminante pour la brillance totale est modifiée de façon que résulte, par rapport à la valeur de correction de base non modifiée, une correction négative ou une correction positive selon que la différence précitée est supérieure ou inférieure à zéro, respectivement.

14. Procédé selon la revendication 12, caractérisé par le fait que le facteur de multiplication se trouve dans une plage de 0,05 à 0,4 et est de préférence égal à environ 0,15.